# EUROPEAN PATENT APPLICATION

(11) **EP 4 394 655 A1**
(43) Date of publication of application: **03.07.2024**
(21) Application number: 22913637.9
(22) Date of filing: 11.10.2022
(51) Int. Cl.: G06K 19/00

(54) **GOODS DETECTION METHOD AND SYSTEM, AND ELECTRONIC TAG READING DEVICE AND SERVER**

(30) Priority: 30.12.2021 CN 202111653925
(71) Applicant: Beijing Jingdong Qianshi Technology Co., Ltd., Beijing 100176 (CN)
(72) Inventor: WANG, Hongwei, Beijing 100176 (CN); ZHE, Wenming, Beijing 100176 (CN); SONG, Baifan, Beijing 100176 (CN)
(74) Representative: Page White Farrer
(86) International application number: PCT/CN2022/124593
(87) International publication number: WO 2023/124373

(57) **Abstract**

The present disclosure relates to the field of warehouse management. Provided are a goods detection method and system, and an electronic tag reading device and a server. The method comprises : receiving first electronic tag data of a target storage location that is detected and transmitted by a first electronic tag reading device, which is mounted on the ceiling; receiving second electronic tag data of the target storage location that is detected and transmitted by a second electronic tag reading device, which is used on the ground; and determining actual goods at the target storage location according to the first electronic tag data and the second electronic tag data, wherein an electronic tag having an identification function is attached to the goods. Therefore, the accuracy of electronic tag data detection is improved, and missed detection of electronic tag data is ameliorated, thereby improving the detection accuracy of goods in stock and then providing advantageous support for warehouse management work, such as the inventory of goods.

## Description

### CROSS-REFERENCE TO RELATED APPLICATIONS

The present application is based on and claims the priority to the Chinese Patent Application No. 202111653925.2 filed on December 30, 2021, the disclosure of which is incorporated herein in its entirety.

### TECHNICAL FIELD

The present disclosure relates to the field of warehouse management, and in particular, to a goods detection method and system, an electronic tag reading device, and a server.

### BACKGROUND

Stock-taking is the process of comparing goods actually stored in the warehouse with goods in a stock record to ensure their consistency.

In some related art, the goods are inventoried by staff. The manual inventorying is so slow and laborious that accuracy of the inventorying is influenced by manpower.

In other related arts, the goods are identified by using electronic tags, and a handheld electronic tag reading device detects the electronic tags on the goods in the warehouse while moving on ground and compares them with electronic tag data in the stock record so as to inventory the goods, which can reduce part of the workload of the manual inventorying.

In some warehouses, goods are placed in a form of stack on ground. For example, large goods such as refrigerators and washers are stacked directly on ground of a warehouse, with over two to three hundred goods stacked within an effective ground stacking area (such as 3m*7m), reaching a height of nearly 10 meters. A stock location where the goods are placed in the form of stack on ground has a very high number of electronic tags in a unit volume, and is surrounded by metal structured household appliances, so that in the process of detecting the electronic tags using the handheld ground electronic tag reading device, missed detection of an electronic tag will occur, which influences the accuracy of the inventorying of the goods.

### SUMMARY

Some embodiments of the present disclosure provide a goods detection method, comprising: receiving first electronic tag data that is detected for a target stock location and transmitted from a first electronic tag reading device mounted on a ceiling; receiving second electronic tag data that is detected for the target stock location and transmitted from a second electronic tag reading device used on ground; and determining actual goods at the target stock location according to the first electronic tag data and the second electronic tag data, wherein electronic tags with identification function are attached to the goods.

In some embodiments, the determining actual goods at the target stock location according to the first electronic tag data and the second electronic tag data comprises: determining goods corresponding to electronic tag identifications in a union of the first electronic tag data and the second electronic tag data as the actual goods at the target stock location.

In some embodiments, The goods detection method further comprises: comparing the electronic tag identifications in the union of the first electronic tag data and the second electronic tag data with electronic tag identifications of the target stock location in a stock record; in response to a comparison result being consistent, determining that the actual goods at the target stock location are consistent with goods at the target stock location in the stock record; in response to the electronic tag identifications in the union of the first electronic tag data and the second electronic tag data lacking a first electronic tag identification compared to the electronic tag identifications of the target stock location in the stock record, determining that the actual goods at the target stock location lack goods corresponding to the first electronic tag identification compared to the goods at the target stock location in the stock record; and in response to the electronic tag identifications in the union of the first electronic tag data and the second electronic tag data having more a second electronic tag identification compared to the electronic tag identifications of the target stock location in the stock record, determining that the actual goods at the target stock location have more goods corresponding to the second electronic tag identification compared to the goods at the target stock location in the stock record.

In some embodiments, the determining actual goods at the target stock location according to the first electronic tag data and the second electronic tag data comprises: according to a correspondence between stock location and electronic tag identification, selecting an electronic tag identification of the target stock location from the first electronic tag data as a first electronic tag set, selecting the electronic tag identification of the target stock location from the second electronic tag data as a second electronic tag set, and determining goods corresponding to electronic tag identifications in a union of the first electronic tag set and the second electronic tag set as the actual goods at the target stock location.

In some embodiments, The goods detection method further comprises: comparing the electronic tag identifications in the union of the first electronic tag set and the second electronic tag set with electronic tag identifications of the target stock location in a stock record; in response to a comparison result being consistent, determining that the actual goods at the target stock location are consistent with goods at the target stock location in the stock record; and in response to the electronic tag identifications in the union of the first electronic tag set and the second electronic tag set lacking a third electronic tag identification compared to the electronic tag identifications of the target stock location in the stock record, determining that the actual goods at the target stock location lack goods corresponding to the third electronic tag identification compared to the goods at the target stock location in the stock record.

Some embodiments of the present disclosure provide a goods detection method, comprising: obtaining, by a first electronic tag reading device mounted on a ceiling, information of a target stock location; adjusting, by the first electronic tag reading device, a radiation angle of an antenna of the first electronic tag reading device to make a radiation range cover the target stock location, according to the information of the target stock location; and reading, by the first electronic tag reading device, first electronic tag data within the radiation range, and transmitting the first electronic tag data to a server for goods detection, wherein the first electronic tag data at least comprises electronic tag identifications of the target stock location.

In some embodiments, the adjusting, by the first electronic tag reading device, a radiation angle of an antenna of the first electronic tag reading device, according to the information of the target stock location comprises: calculating, by the first electronic tag reading device, a phase shift according to the information of the target stock location, changing a phase according to the phase shift, and adjusting the radiation angle of the antenna by changing the phase.

In some embodiments, The goods detection method further comprises: the first electronic tag reading device being awakened after receiving an electromagnetic wave of a preset frequency band, before obtaining the information of the target stock location.

In some embodiments, a second electronic tag reading device sends a scanning signal to awaken the first electronic tag reading device, and obtains second electronic tag data of the target stock location through scanning, and transmits the second electronic tag data to the server for goods detection, wherein the second electronic tag data at least comprises part or all of the electronic tag identifications of the target stock location.

In some embodiments, the server performs goods detection, comprising: selecting, by the server according to a correspondence between stock location and electronic tag identification, electronic tag identifications of the target stock location from the first electronic tag data as a first electronic tag set, and determining goods corresponding to the electronic tag identifications in the first electronic tag set as actual goods at the target stock location; or, determining, by the server, goods corresponding to the electronic tag identifications in the first electronic tag data as the actual goods at the target stock location.

In some embodiments, the target stock location is a stack-on-ground type stock location.

Some embodiments of the present disclosure provide a server, comprising: a memory; and a processor coupled to the memory, wherein the processor is configured to perform the goods detection method according to the embodiments based on instructions stored in the memory.

Some embodiments of the present disclosure provide an electronic tag reading device, comprising: a control unit configured to calculate a phase shift according to information of a target stock location and send the phase shift to a phase shifter; the phase shifter configured to change a phase according to the phase shift, and adjust a radiation angle of an antenna by changing the phase to make a radiation range cover the target stock location; the antenna with the radiation angle adjustable by the phase, configured to emit a radiation signal and receive signals carrying electronic tag identifications returned by electronic tags within the radiation range; and a communication unit configured to transmit received first electronic tag data within the radiation range to the server, wherein the first electronic tag data at least comprises electronic tag identifications of the target stock location.

In some embodiments, the device further comprises: an awakening unit configured to receive an electromagnetic wave of a preset frequency band and awaken the electronic tag reading device.

In some embodiments, the awakening unit comprises: an awakening antenna configured to receive the electromagnetic wave of the preset frequency band; and an awakening circuit configured to collect electromagnetic wave energy and generate a direct current signal for the awakening.

In some embodiments, the antenna comprises a feed network and an antenna array.

Some embodiments of the present disclosure provide a goods detection system, comprising: a server; and a first electronic tag reading device deployed in areas in a warehouse and mounted on a ceiling, such as the above electronic tag reading device.

In some embodiments, the system further comprises: a second electronic tag reading device used on ground, configured to send a scanning signal to awaken the first electronic tag reading device, and obtain second electronic tag data of the target stock location through scanning and transmit the second electronic tag data to the server, wherein the second electronic tag data at least comprises part or all of the electronic tag identifications of the target stock location.

Some embodiments of the present disclosure provide a non-transitory computer-readable storage medium storing a computer program which is executed by a processor to implement the steps of the goods detection method according to the embodiments.

### BRIEF DESCRIPTION OF THE DRAWINGS

The accompanying drawings that need to be used in the description of the embodiments or related art will be briefly described below. The present disclosure can be more clearly understood according to the following detailed description, which proceeds with reference to the accompanying drawings.

It is apparent that the drawings in the following description are merely examples of the present disclosure and for one of ordinary skill in the art, other drawings can be obtained without paying inventive labor.
Fig. 1 illustrates a schematic diagram of goods attached with an electronic tag.
Fig. 2 illustrates a schematic diagram of placing goods in a form of stack on ground.
Fig. 3 illustrates a schematic diagram of a goods detection system according to some embodiments of the present disclosure.
Fig. 4 illustrates a schematic diagram of a first electronic tag reading device according to some embodiments of the present disclosure.
Fig. 5 illustrates a schematic diagram of beam major lobes of an antenna of a first electronic tag reading device at different radiation angles according to some embodiments of the present disclosure.
Fig. 6 illustrates a schematic diagram of an awakening unit according to some embodiments of the present disclosure.
Fig. 7 illustrates a schematic diagram of deploying first electronic tag reading devices in areas in a warehouse according to some embodiments of the present disclosure.
Fig. 8 illustrates a schematic diagram of radiation of an antenna of one first electronic tag reading device in Fig. 7 at various radiation angles.
Fig. 9 illustrates a schematic flow diagram of a goods detection method according to some embodiments of the present disclosure. In these embodiments, an electronic tag reading device is only a first electronic tag reading device mounted on a ceiling.
Fig. 10 illustrates a schematic flow diagram of a goods detection method according to other embodiments of the present disclosure. In these embodiments, electronic tag reading devices comprises a first electronic tag reading device mounted on a ceiling and a second electronic tag reading device used on ground.

### DETAILED DESCRIPTION

The technical solutions in the embodiments of the present disclosure will be clearly and completely described below in conjunction with the drawings in the embodiments of the present disclosure.

Unless specifically stated otherwise, the terms of "first", "second", etc. in this disclosure are used for distinguishing different objects, and are not used for indicating the meaning of size or sequence, etc.

An electronic tag may be, for example, an RFID (Radio Frequency Identification) electronic tag. The electronic tag is in non-contact data communication with an electronic tag reading device, so that an electronic tag identification is detected by the electronic tag reading device. The electronic tag identification can identify the electronic tag, and thereby identify goods attached with the electronic tag.

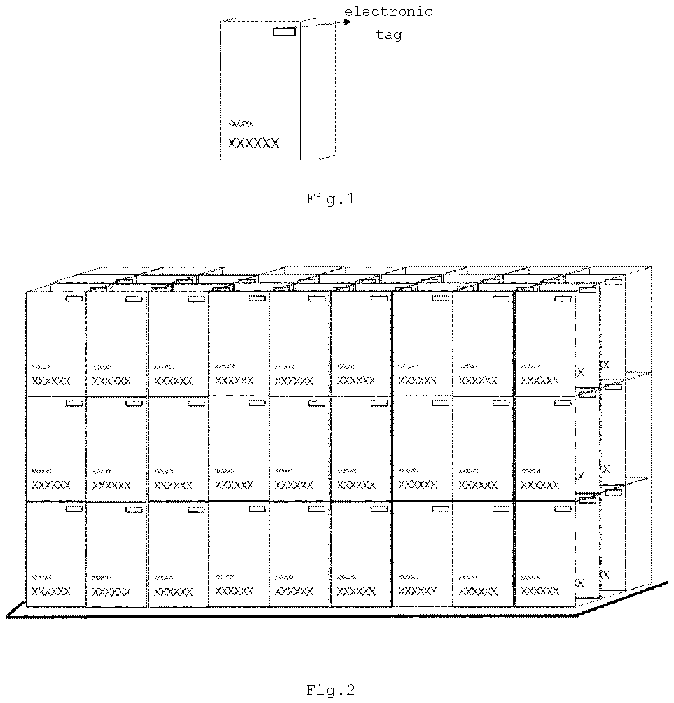

Fig. 1 illustrates a schematic diagram of goods attached with an electronic tag. The electronic tag is attached to an outer surface of the goods, such as an upper right corner.

Fig. 2 illustrates a schematic diagram of placing goods in a form of stack on ground. The goods placed in the form of stack on ground may be large goods such as refrigerators and washers. A stock location where the goods are placed in the form of stack on ground is called a stack-on-ground type stock location.

According to embodiments of the present disclosure, electronic tags of the target stock location are jointly detected by a first electronic tag reading device mounted on a ceiling and a second electronic tag reading device used on ground, which fully utilizes the advantage of the first electronic tag reading device mounted on the ceiling for detecting high and dense electronic tags, and the advantage of the second electronic tag reading device used on ground for detecting near-the-ground and peripheral electronic tags, so that accuracy of detection of electronic tag data is enhanced, a missed detection condition of the electronic tag data is improved, and further accuracy of stock goods detection is enhanced, thereby providing advantageous support for warehouse management work such as inventorying of goods. In addition, a radiation angle of an antenna of the first electronic tag reading device mounted on the ceiling is adjustable, so that a radiation range is able to better cover the target stock location, which enhances the accuracy of electronic tag data detection, and further enhances the accuracy of stock goods detection.

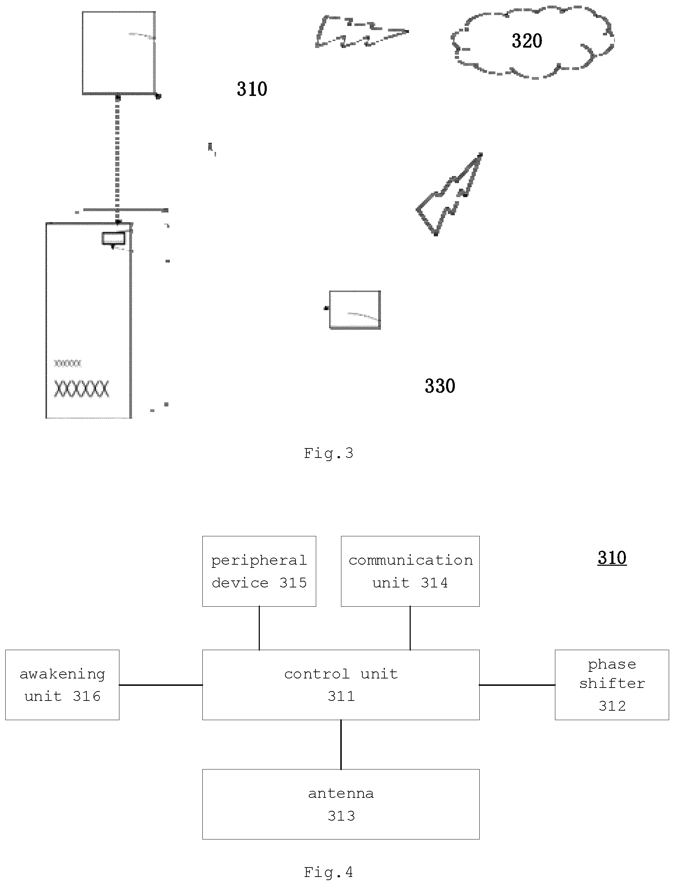

Fig. 3 illustrates a schematic diagram of a goods detection system according to some embodiments of the present disclosure. As shown in Fig. 3, the goods detection system comprises: a server 320, and may further comprise one or more of a first electronic tag reading device 310 mounted on a ceiling and a second electronic tag reading device 330 used on ground. The first electronic tag reading device 310 and the second electronic tag reading device 330 are responsible for collecting electronic tag data of goods on a stock location. The server 320 may detect actual goods on the stock location according to the collected electronic tag data, and may further compare the collected electronic tag data with electronic tag data in stock record, so as to inventory stock goods.

Fig. 4 illustrates a schematic diagram of a first electronic tag reading device according to some embodiments of the present disclosure. As shown in Fig. 4, the first electronic tag reading device 310 comprises: a control unit 311, a phase shifter 312, an antenna 313, a communication unit 314, and may further comprise a peripheral device 315, an awakening unit 316, and the like. The components are respectively described below.

The control unit 311 is mainly responsible for processing instructions of a server, processing the electronic tag data, controlling the phase shifter 312, and the like. For example, information of a target stock location to be detected is obtained from the server instruction, a phase shift is calculated according to the information of the target stock location and sent to the phase shifter 312, and the collected first electronic tag data is buffered and transmitted to the server 320 through the communication unit 314. The first electronic tag data at least comprises electronic tag identifications of the target stock location and might also comprises an electronic tag identifications of other stock locations, which is related to coverage control accuracy of the first electronic tag reading device 310. Regardless of whether the first electronic tag data comprises the electronic tag identifications of the other stock locations, as long as it comprises the electronic tag identifications of the target stock location, the goods at the target stock location can be accurately inventoried by the selecting processing of the server 320. Furthermore, the target stock location may be one or more.

The phase shifter 312 is configured to change a phase according to a phase shift, and adjust a radiation angle of the antenna 313 by changing the phase, so that a radiation range is able to cover the target stock location, and the radiation range might also cover other stock locations. If the radiation range covers the other stock locations, the collected first electronic tag data might comprise electronic tag identifications of the other stock locations. As described above, regardless of whether the first electronic tag data comprises the electronic tag identifications of the other stock locations, as long as it comprises the electronic tag identifications of the target stock location, the goods at the target stock location can be accurately inventoried by the selecting processing of the server 320. The phase shifter 312 is, for example, an electrically controlled phase shifter 312.

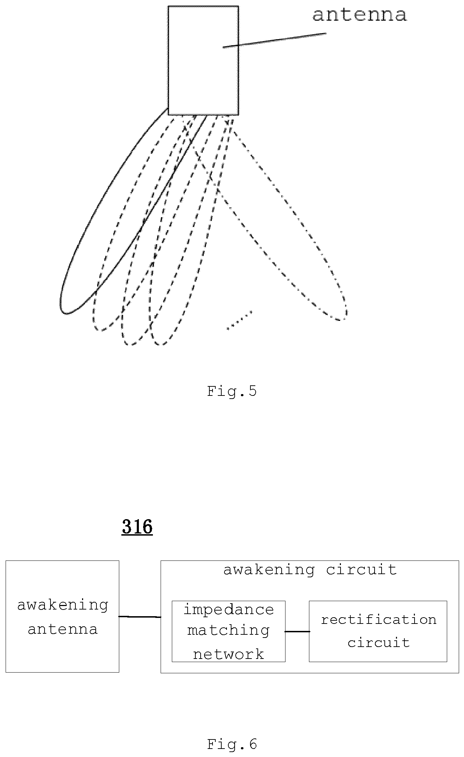

The antenna 313 with the radiation angle adjustable by the phase, is configured to emit a radiation signal and receive signals carrying electronic tag identifications returned by the electronic tags within the radiation range. The antenna 313 comprises a feed network and an antenna array. The feed network is connected with the first electronic tag reading device 310 by a radio frequency coaxial cable. The form of the antenna array causes the antenna 313 to necessarily have strong directivity, for example, 16dBi, so as to reliably read a long-distance signal, which can reduce the deployment density of the first electronic tag reading devices 310 in the warehouse, and in conjunction with a phase difference of the phase shift of the phase shifter 312 with respect to the feed network, reduces a probability of the existence of a blind area of the antenna 313 while achieving large-range scanning. Fig. 5 illustrates a schematic diagram of beam major lobes of the antenna 313 at different radiation angles.

The communication unit 314 is responsible for communication with an external device, and in this embodiment, the communication unit 314 is mainly responsible for communication with the server 320. The communication unit 314 may communicate with the server 320 using various wireless communication technologies. The communication unit 314 may also communicate by using a combination of the wireless communication technologies and wired communication technologies, for example, wireless communication is used between each communication unit 314 and a relay unit, and wired communication can be used between the relay unit and the server 320, which can not only reduce wiring, but also consider data transmission efficiency. The communication unit 314 is configured to transmit the received first electronic tag data within the radiation range to the server 320, wherein the first electronic tag data at least comprises the electronic tag identifications of the target stock location, so that the server 320 determines the actual goods at the target stock location according to the first electronic tag data.

The peripheral device 315 comprises, for example, a support structure, a working power supply, and the like of the first electronic tag reading device 310.

The awakening unit 316 is configured to receive an electromagnetic wave of a preset frequency band and awaken the first electronic tag reading device 310. Before the awakening, the first electronic tag reading device 310 is in a sleep state so that power consumption is reduced and electromagnetic radiation is reduced, and after the awakening, the first electronic tag reading device 310 is in a working state so that it can receive instructions, or collect the electronic tag data, or the like. As shown in Fig. 6, the awakening unit 316 comprises: an awakening antenna configured to receive the electromagnetic wave of the preset frequency band; and an awakening circuit configured to collect electromagnetic wave energy and generate a direct current signal for the awakening. The awakening circuit comprises, for example, an impedance matching network collecting the electromagnetic wave energy of the preset frequency band and a rectification circuit rectifying the electromagnetic wave energy into direct current.

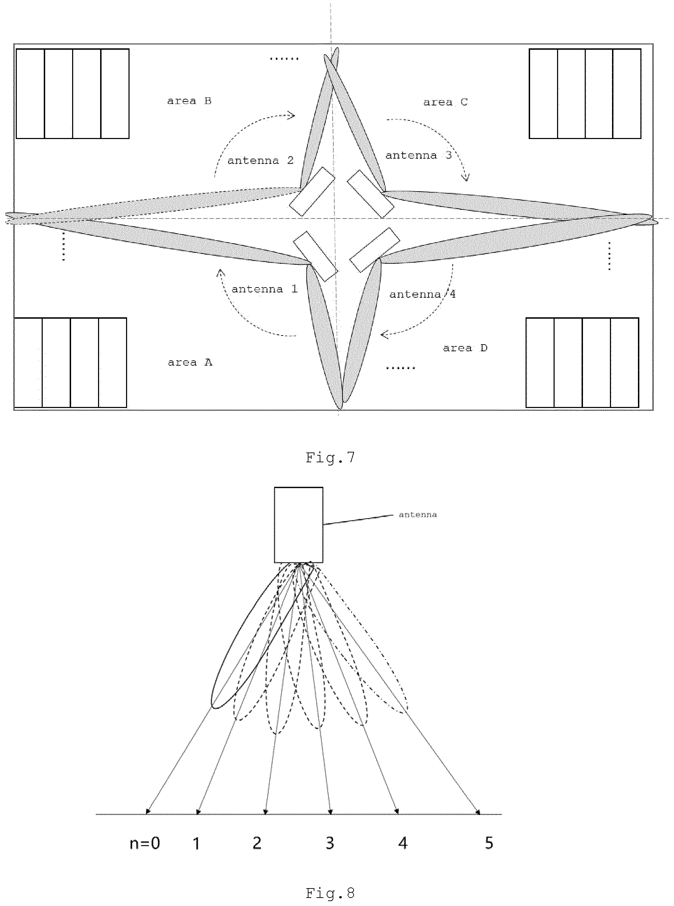

The first electronic tag reading device 310 is deployed in areas in the warehouse and mounted on a ceiling, so as to achieve full coverage of the warehouse area. As shown in Fig. 7, in a certain warehouse area, assuming that the warehouse area has a size of 50m×40m and is divided into four areas of ABCD, where one first electronic tag reading device 310 is mounted on a ceiling of each area, each first electronic tag reading device 310 covers one area, a ceiling mounting height of the first electronic tag reading device 310 is, for example, 12m, a horizontal-plane (H-plane) scanning angle of a major lobe of an antenna 313 of the first electronic tag reading device 310 in control of the phase shifter 312 is not less than 90° , and a controllable operating range of each first electronic tag reading device 310 is 25m, then the full-range coverage of the warehouse areas can be achieved by deploying 4 first electronic tag reading devices 310.

As described above, the first electronic tag reading device 310 adjusts the radiation angle of the antenna 313 by changing the phase, assuming that a correspondence between the phase shift Δ φ and a major lobe direction angle Δθ of the antenna 313 is Δθ = f(n×Δφ), where a value of n is 0,1,2,3, •••, N, N being the number of times the phase shift is changed that is required to realize a major lobe angle scanning range. As shown in Fig. 8, assuming that N is 5, according to the deployment of the first electronic tag reading device 310 of Fig. 7, Δθ =0° when n=0, Δθ =18° when n=1, Δθ=36° when n=2, and so on, Δθ=90° when n=5. It is assumed that 6×12 stock locations are comprised within the radiation range of the first electronic tag reading device 310. When n=0, a major lobe direction of the antenna 313 is directed at 12 stock locations of N(1, 1) to N(1, 12), when n=1, it is directed at 12 stock locations of N(2, 1) to N(2, 12), and so on, and when n=5, it is directed at 12 stock locations of N(6, 1) to N(6, 12).

The second electronic tag reading device 330 may be, for example, a handheld PDA (Personal Digital Assistant). The second electronic tag reading device 330 sends a scanning signal to awaken the corresponding first electronic tag reading device 310 mounted on the ceiling, obtains stock location number data and second electronic tag data of goods on the stock location through scanning, and transmits the stock location number data and the second electronic tag data to the server 320, wherein the second electronic tag data at least comprises part or all of the electronic tags of the target stock location.

The server 320 is, for example, a cloud server 320. The server 320 is responsible for issuing the instruction to the first electronic tag reading device 310 or/and the second electronic tag reading device 330, collecting the electronic tag data reported by the first electronic tag reading device 310 or/and the second electronic tag reading device 330, and detecting the actual goods at the stock location according to the collected electronic tag data, and can further compare the collected electronic tag data with the electronic tag data in the stock record so as to inventory the stock goods.

If the electronic tag is detected by only using the first electronic tag reading device 310 mounted on the ceiling, the server 320 is configured to send information of the target stock location to the first electronic tag reading device 310, receive the first electronic tag data detected and sent by the first electronic tag reading device 310, the first electronic tag data at least comprising the electronic tag identifications of the target stock location, and detect the goods at the target stock location according to the first electronic tag data.

A first method of detecting, by the server 320, the goods at the target stock location according to the first electronic tag data is, for example: determining, by the server 320, goods corresponding to the electronic tag identifications in the first electronic tag data as the actual goods at the target stock location.

The goods detection method is applicable to the case where the first electronic tag reading device can accurately cover the target stock location, so that in this case, the first electronic tag data comprises electronic tag data of the target stock location and does not comprise electronic tag data of other stock locations.

Based on the first method, the server 320 may inventory the stock goods further by using the following method, where the server 320 compares consistency between the electronic tag identifications in the first electronic tag data and the electronic tag identification of the target stock location in the stock record, so as to inventory the goods at the target stock location. If the comparison result is consistent, it is determined that the actual goods at the target stock location are consistent with goods at the target stock location in the stock record; if the electronic tag identifications in the first electronic tag data lack the first electronic tag identification compared to the electronic tag identifications of the target stock location in the stock record, it is determined that that the actual goods at the target stock location lack goods corresponding to the first electronic tag identification compared to the goods at the target stock location in the stock record; and if the electronic tag identifications in the first electronic tag data have more the second electronic tag identification compared to the electronic tag identifications of the target stock location in the stock record, it is determined that the actual goods at the target stock location have more goods corresponding to the second electronic tag identification compared to the goods at the target stock location in the stock record. Therefore, abnormity of the storage of the goods is detected more comprehensively.

A second method of detecting, by the server 320, the goods at the target stock location according to the first electronic tag data is, for example: according to the correspondence between stock location and electronic tag identification, selecting, by the server 320, the electronic tag identification of the target stock location from the first electronic tag data as a first electronic tag set, and determining goods corresponding to the electronic tag identifications in the first electronic tag set as the actual goods at the target stock location.

The goods detection method is applicable to the case where the first electronic tag reading device cannot accurately cover the target stock location, for example, covering the target stock location and part of a peripheral stock location, so that in this case, the first electronic tag data comprises electronic tag data of the target stock location and another stock location, but the goods at the target stock location can still be determined, and the requirement for the accuracy of the working coverage range of the first electronic tag reading device is low.

Based on the second method, the server 320 may inventory the stock goods further by using the following method, where consistency between the detected first electronic tag set of the target stock location and the electronic tag identification of the target stock location in the stock record is compared, so as to inventory the goods at the target stock location. If the comparison result is consistent, it is determined that the actual goods at the target stock location are consistent with goods at the target stock location in the stock record; and if the first electronic tag set lacks a third electronic tag identification compared to the electronic tag identifications of the target stock location in the stock record, it is determined that the actual goods at the target stock location lack goods corresponding to the third electronic tag identification compared to the goods at the target stock location in the stock record.

If the electronic tag is detected by using the first electronic tag reading device 310 mounted on the ceiling and the second electronic tag reading device 330 used on ground, the server 320 is configured to receive the first electronic tag data that is detected for the target stock location and transmitted from the first electronic tag reading device mounted on the ceiling; receive the second electronic tag data that is detected for the target stock location and transmitted from the second electronic tag reading device used on ground; and determine actual goods at the target stock location according to the first electronic tag data and the second electronic tag data.

A third method of determining, by the server 320, actual goods at the target stock location according to the first electronic tag data and the second electronic tag data comprises: determining goods corresponding to electronic tag identifications in a union of the first electronic tag data and the second electronic tag data as the actual goods at the target stock location.

The goods detection method is applicable to the case where the electronic tag reading device can accurately cover the target stock location, so that in this case, the first electronic tag data and the second electronic tag data comprise the electronic tag data of the target stock location and do not comprise electronic tag data of other stock locations.

Based on the third method, the server 320 may inventory the stock goods further by using the following method, where the electronic tag identifications in the union of the first electronic tag data and the second electronic tag data are compared with the electronic tag identification of the target stock location in the stock record; if the comparison result is consistent, it is determined that the actual goods at the target stock location are consistent with goods at the target stock location in the stock record; if the electronic tag identifications in the union of the first electronic tag data and the second electronic tag data lack a first electronic tag identification compared to the electronic tag identifications of the target stock location in the stock record, it is determined that the actual goods at the target stock location lack goods corresponding to the first electronic tag identification compared to goods at the target stock location in the stock record; and if the electronic tag identifications in the union of the first electronic tag data and the second electronic tag data have more the second electronic tag identification compared to the electronic tag identifications of the target stock location in the stock record, it is determined that the actual goods at the target stock location have more goods corresponding to the second electronic tag identification compared to the goods at the target stock location in the stock record. Therefore, abnormity of the storage of the goods is detected more comprehensively.

A fourth method of determining, by the server 320, the actual goods at the target stock location according to the first electronic tag data and the second electronic tag data comprises: according to the correspondence between stock location and electronic tag identification, selecting the electronic tag identification of the target stock location from the first electronic tag data as a first electronic tag set, selecting the electronic tag identification of the target stock location from the second electronic tag data as a second electronic tag set, and determining goods corresponding to electronic tag identifications in a union of the first electronic tag set and the second electronic tag set as the actual goods at the target stock location.

The goods detection method is applicable to the case where the electronic tag reading device cannot accurately cover the target stock location, for example, covering the target stock location and part of a peripheral stock location, so that in this case, the electronic tag data comprises electronic tag data of the target stock location and the other stock location, but the goods at the target stock location can still be determined, and the requirement for the accuracy of the working coverage range of the electronic tag reading device is low.

Based on the fourth method, the server 320 may further inventory the stock goods by using the following method, where the electronic tag identifications in the union of the first electronic tag set and the second electronic tag set are compared with the electronic tag identification of the target stock location in the stock record; if the comparison result is consistent, it is determined that the actual goods at the target stock location are consistent with goods at the target stock location in the stock record; and if the electronic tag identifications in the union of the first electronic tag set and the second electronic tag set lack a third electronic tag identification compared to the electronic tag identifications of the target stock location in the stock record, it is determined that the actual goods at the target stock location lack goods corresponding to the third electronic tag identification compared to goods at the target stock location in the stock record.

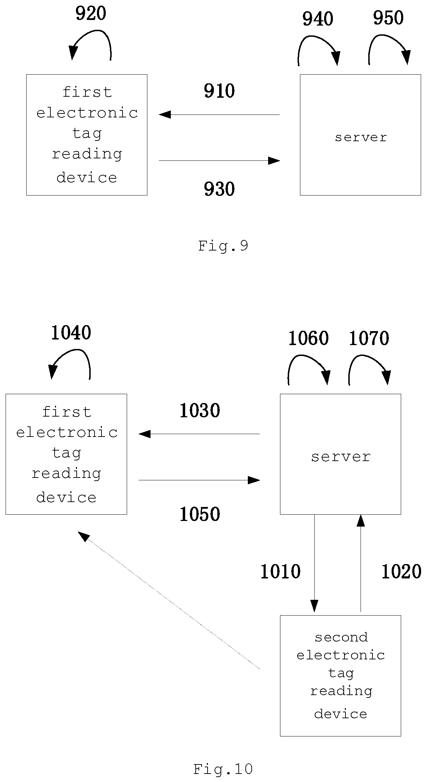

Fig. 9 illustrates a schematic flow diagram of a goods detection method according to some embodiments of the present disclosure. In these embodiments, an electronic tag reading device is only a first electronic tag reading device mounted on a ceiling.

As shown in Fig. 9, the goods detection method of this embodiment comprises the following steps.

In step 910, a server sends, to the first electronic tag reading device mounted on the ceiling which is able to cover a target stock location, a detection instruction, in which information of the target stock location is comprised; and the first electronic tag reading device mounted on the ceiling receives the detection instruction sent by the server, and obtains the information of the target stock location from the detection instruction.

The target stock location is, for example, a stack-on-ground type stock location, or other goods-intensive stock locations.

In step 920, the first electronic tag reading device adjusts a radiation angle of an antenna of the first electronic tag reading device according to the information of the target stock location, so that a radiation range is able to cover the target stock location.

In some embodiments, the first electronic tag reading device calculates a phase shift according to the information of the target stock location, changes a phase according to the phase shift, and adjusts the radiation angle of the antenna by changing the phase.

In step 930, the first electronic tag reading device reads first electronic tag data within the radiation range and transmits the first electronic tag data to the server, wherein the first electronic tag data at least comprises electronic tag identifications of the target stock location.

In step 940, the server detects actual goods at the target stock location according to the first electronic tag data.

A first method of detecting, by the server 320, the goods at the target stock location according to the first electronic tag data is, for example: determining, by the server 320, goods corresponding to the electronic tag identifications in the first electronic tag data as the actual goods at the target stock location.

The goods detection method is applicable to the case where the first electronic tag reading device can accurately cover the target stock location, so that in this case, the first electronic tag data comprises the electronic tag data of the target stock location and does not comprise electronic tag data of other stock locations.

A second method of detecting, by the server 320, the goods at the target stock location according to the first electronic tag data is, for example: selecting, by the server 320, according to a correspondence between stock location and electronic tag identification, the electronic tag identification of the target stock location from the first electronic tag data as a first electronic tag set, and determining goods corresponding to the electronic tag identifications in the first electronic tag set as the actual goods at the target stock location.

The goods detection method is applicable to the case where the first electronic tag reading device cannot accurately cover the target stock location, for example, covering the target stock location and part of a peripheral stock location, so that in this case, the first electronic tag data comprises electronic tag data of the target stock location and the other stock location, but the goods at the target stock location can still be determined, and the requirement for the accuracy of the working coverage range of the first electronic tag reading device is low.

In step 950, the server may further inventory the goods at the target stock location.

Based on the first method, the server 320 may inventory the stock goods further by using the following method, where the server 320 compares consistency between the electronic tag identifications in the first electronic tag data with an electronic tag identification of the target stock location in the stock record, so as to inventory the goods at the target stock location. If the comparison result is consistent, it is determined that the actual goods at the target stock location are consistent with goods at the target stock location in the stock record; if the electronic tag identifications in the first electronic tag data lack the first electronic tag identification compared to the electronic tag identifications of the target stock location in the stock record, it is determined that the actual goods at the target stock location lack goods corresponding to the first electronic tag identification compared to goods at the target stock location in the stock record; and if the electronic tag identifications in the first electronic tag data have more a second electronic tag identification compared to the electronic tag identifications of the target stock location in the stock record, it is determined that the actual goods at the target stock location have more goods corresponding to the second electronic tag identification compared to the goods at the target stock location in the stock record. Therefore, abnormity of the storage of the goods is detected more comprehensively.

Based on the second method, the server 320 may inventory the stock goods further by using the following method, where consistency between the detected first electronic tag set of the target stock location and the electronic tag identification of the target stock location in the stock record is compared, so as to inventory the goods at the target stock location. If the comparison result is consistent, it is determined that the actual goods at the target stock location are consistent with goods at the target stock location in the stock record; and if the first electronic tag set lacks a third electronic tag identification compared to the electronic tag identifications of the target stock location in the stock record, it is determined that the actual goods at the target stock location lack goods corresponding to the third electronic tag identification compared to the goods at the target stock location in the stock record.

If the detection task also comprises other target stock locations, detection of a next target stock location is continued according to the goods detection method until the detection task is completely finished.

According to the above embodiments, the electronic tags of the goods are collected by using the first electronic tag reading device mounted on the ceiling, and the radiation angle of the antenna is adjustable, so that the radiation range is able to cover the target stock location, which enhances the accuracy of the electronic tag data detection, improves the missed detection of the electronic tag data detection, and further enhances the accuracy of the stock goods detection, thereby providing advantageous support for warehouse management work such as inventorying of goods. The solution of this embodiment can be applied to a goods inventorying scene with dense electronic tags, for example, a stack-on-ground type goods inventorying scene.

Fig. 10 illustrates a schematic flow diagram of a goods detection method according to some embodiments of the present disclosure. In these embodiments, an electronic tag reading device comprises a first electronic tag reading device mounted on a ceiling and a second electronic tag reading device used on ground.

As shown in Fig. 10, the goods detection method of this embodiment comprises the following steps.

In step 1010, a server sends to the second electronic tag reading device used on ground a detection instruction, in which information of a target stock location is comprised.

The target stock location is, for example, a stack-on-ground type stock location or other goods-intensive stock locations.

In step 1020, the second electronic tag reading device, in response to the detection instruction, sends a scanning signal to awaken the first electronic tag reading device mounted on the ceiling corresponding to the target stock location, and obtains second electronic tag data of the target stock location through scanning and transmits the second electronic tag data to the server, wherein the second electronic tag data at least comprises part or all of electronic tag identifications of the target stock location.

In addition, the second electronic tag reading device may further scan a target stock location number and transmit the target stock location number together with the second electronic tag data to the server.

In step 1030, the first electronic tag reading device mounted on the ceiling corresponding to the target stock location is awakened, and the server sends to the first electronic tag reading device a detection instruction, in which the information of the target stock location is comprised; the first electronic tag reading device receives the detection instruction sent by the server and obtains the information of the target stock location from the detection instruction.

In step 1040, the first electronic tag reading device mounted on the ceiling corresponding to the target stock location adjusts a radiation angle of an antenna of the first electronic tag reading device according to the information of the target stock location, so that a radiation range is able to cover the target stock location.

In step 1050, the first electronic tag reading device mounted on the ceiling corresponding to the target stock location reads first electronic tag data within the radiation range and transmits the first electronic tag data to the server, wherein the first electronic tag data at least comprises electronic tag identifications of the target stock location.

In step 1060, the server determines actual goods at the target stock location according to the obtained first electronic tag data and second electronic tag data.

A third method of determining, by the server 320, the actual goods at the target stock location according to the first electronic tag data and the second electronic tag data comprises: determining goods corresponding to electronic tag identifications in a union of the first electronic tag data and the second electronic tag data as the actual goods at the target stock location.

The goods detection method is applicable to the case where the electronic tag reading device can accurately cover the target stock location, so that in this case, the first electronic tag data and the second electronic tag data comprise the electronic tag data of the target stock location and do not comprise electronic tag data of other stock locations.

A fourth method of determining, by the server 320, the actual goods at the target stock location according to the first electronic tag data and the second electronic tag data comprises: according to a correspondence between stock location and electronic tag identification, selecting the electronic tag identification of the target stock location from the first electronic tag data as a first electronic tag set, selecting the electronic tag identification of the target stock location from the second electronic tag data as a second electronic tag set, and determining goods corresponding to electronic tag identifications in a union of the first electronic tag set and the second electronic tag set as the actual goods at the target stock location.

The goods detection method is applicable to the case where the electronic tag reading device cannot accurately cover the target stock location, for example, covering the target stock location and part of a peripheral stock location, so that in this case, the electronic tag data comprises electronic tag data of the target stock location and the other stock location, but the goods at the target stock location can still be determined, and the requirement for the accuracy of the working coverage range of the electronic tag reading device is low.

In step 1070, the server may further inventory the goods at the target stock location.

Based on the third method, the server 320 may inventory the stock goods further by using the following method, where the electronic tag identifications in the union of the first electronic tag data and the second electronic tag data are compared with an electronic tag identification of the target stock location in the stock record; if the comparison result is consistent, it is determined that the actual goods at the target stock location are consistent with goods at the target stock location in the stock record; if the electronic tag identifications in the union of the first electronic tag data and the second electronic tag data lack a first electronic tag identification compared to the electronic tag identifications of the target stock location in the stock record, it is determined that the actual goods at the target stock location lack goods corresponding to the first electronic tag identification compared to goods at the target stock location in the stock record; and if the electronic tag identifications in the union of the first electronic tag data and the second electronic tag data have more a second electronic tag identification compared to the electronic tag identifications of the target stock location in the stock record, it is determined that the actual goods at the target stock location have more goods corresponding to the second electronic tag identification compared to the goods at the target stock location in the stock record. Therefore, abnormity of the storage of the goods is detected more comprehensively.

Based on the fourth method, the server 320 may inventory the stock goods further by using the following method, where the electronic tag identifications in the union of the first electronic tag set and the second electronic tag set are compared with an electronic tag identification of the target stock location in the stock record; if the comparison result is consistent, it is determined that the actual goods at the target stock location are consistent with goods at the target stock location in the stock record; and if the electronic tag identifications in the union of the first electronic tag set and the second electronic tag set lack a third electronic tag identification compared to the electronic tag identifications of the target stock location in the stock record, it is determined that the actual goods at the target stock location lack goods corresponding to the third electronic tag identification compared to the goods at the target stock location in the stock record.

If the detection task also comprises other target positions, detection of a next target position is continued according to the goods detection method until the detection task is completely finished.

According to the above embodiments, the electronic tags of the target stock location are jointly detected by the first electronic tag reading device mounted on the ceiling and the second electronic tag reading device used on ground, which fully utilizes the advantage of the first electronic tag reading device mounted on the ceiling for detecting high and dense electronic tags and the advantage of the second electronic tag reading device used on ground for detecting near-the-ground and peripheral electronic tags, so that the accuracy of the electronic tag data detection is enhanced, missed detection of the electronic tag data is improved, and further the accuracy of the stock goods detection is improved, thereby providing advantageous support for warehouse management work such as inventorying of goods. The solution of this embodiment can be applied to a goods inventorying scene with dense electronic tags, for example, a stack-on-ground type goods inventorying scene.

The embodiments of the present disclosure further provide a non-transitory computer-readable storage medium having thereon storing a computer program which, when executed by a processor, implements the steps of the goods detection method.

It should be appreciated by those skilled in the art that, the embodiments of the present disclosure may be provided as a method, system, or computer program product. Accordingly, the present disclosure may take a form of an entire hardware embodiment, an entire software embodiment, or an embodiment combining software and hardware aspects. Furthermore, the present disclosure may take a form of a computer program product implemented on one or more non-transitory computer-readable storage media (including, but not limited to, a disk memory, CD-ROM, optical memory, etc.) having computer program code embodied therein.

The present disclosure is described with reference to flow diagrams and/or block diagrams of The goods detection method, device (system) and computer program product according to the embodiments of the present disclosure. It should be understood that each flow and/or block of the flow diagrams and/or block diagrams, and a combination of flows and/or blocks in the flow diagrams and/or block diagrams, can be implemented by computer program instructions. These computer program instructions may be provided to a processor of a general-purpose computer, special-purpose computer, embedded processor, or other programmable data processing devices to produce a machine, such that the instructions which are executed through the processor of the computer or other programmable data processing devices create means for implementing the functions specified in one or more flows of the flow diagrams and/or one or more blocks of the block diagrams.

These computer program instructions may also be stored in a computer-readable memory that can guide a computer or other programmable data processing devices to work in a specific manner, such that the instructions stored in the computer-readable memory produce an article of manufacture including instruction means which implement the functions specified in one or more flows of the flow diagrams and/or one or more blocks of the block diagrams.

These computer program instructions may also be loaded onto a computer or other programmable data processing devices to cause a series of operational steps to be performed on the computer or other programmable devices to produce a computer-implemented process, such that the instructions which are executed on the computer or other programmable devices provide steps for implementing the functions specified in one or more flows of the flow diagrams and/or one or more blocks of the block diagrams.

The above description is only preferred embodiments of the present disclosure and not used for limiting the present disclosure, and any modifications, equivalent substitutions, improvements and the like that are made within the spirit and principles of the present disclosure should be comprised within the scope of protection of the present disclosure.

## Claims

1. A goods detection method, comprising:
receiving first electronic tag data that is detected for a target stock location and transmitted from a first electronic tag reading device mounted on a ceiling;
receiving second electronic tag data that is detected for the target stock location and transmitted from a second electronic tag reading device used on ground; and
determining actual goods at the target stock location according to the first electronic tag data and the second electronic tag data, wherein electronic tags with identification function are attached to the goods.

2. The goods detection method according to claim 1, wherein the determining actual goods at the target stock location according to the first electronic tag data and the second electronic tag data comprises:
determining goods corresponding to electronic tag identifications in a union of the first electronic tag data and the second electronic tag data as the actual goods at the target stock location.

3. The goods detection method according to claim 2, further comprising:
comparing the electronic tag identifications in the union of the first electronic tag data and the second electronic tag data with electronic tag identifications of the target stock location in a stock record;
in response to a comparison result being consistent, determining that the actual goods at the target stock location are consistent with goods at the target stock location in the stock record;
in response to the electronic tag identifications in the union of the first electronic tag data and the second electronic tag data lacking a first electronic tag identification compared to the electronic tag identifications of the target stock location in the stock record, determining that the actual goods at the target stock location lack goods corresponding to the first electronic tag identification compared to the goods at the target stock location in the stock record; and
in response to the electronic tag identifications in the union of the first electronic tag data and the second electronic tag data having more a second electronic tag identification compared to the electronic tag identifications of the target stock location in the stock record, determining that the actual goods at the target stock location have more goods corresponding to the second electronic tag identification compared to the goods at the target stock location in the stock record.

4. The goods detection method according to claim 1, wherein the determining actual goods at the target stock location according to the first electronic tag data and the second electronic tag data comprises:
according to a correspondence between stock location and electronic tag identification, selecting an electronic tag identification of the target stock location from the first electronic tag data as a first electronic tag set, selecting the electronic tag identification of the target stock location from the second electronic tag data as a second electronic tag set, and determining goods corresponding to electronic tag identifications in a union of the first electronic tag set and the second electronic tag set as the actual goods at the target stock location.

5. The goods detection method according to claim 4, further comprising:
comparing the electronic tag identifications in the union of the first electronic tag set and the second electronic tag set with electronic tag identifications of the target stock location in a stock record;
in response to a comparison result being consistent, determining that the actual goods at the target stock location are consistent with goods at the target stock location in the stock record; and
in response to the electronic tag identifications in the union of the first electronic tag set and the second electronic tag set lacking a third electronic tag identification compared to the electronic tag identifications of the target stock location in the stock record, determining that the actual goods at the target stock location lack goods corresponding to the third electronic tag identification compared to the goods at the target stock location in the stock record.

6. A goods detection method, comprising:
obtaining, by a first electronic tag reading device mounted on a ceiling, information of a target stock location;
adjusting, by the first electronic tag reading device, a radiation angle of an antenna of the first electronic tag reading device to make a radiation range cover the target stock location, according to the information of the target stock location; and
reading, by the first electronic tag reading device, first electronic tag data within the radiation range, and transmitting the first electronic tag data to a server for goods detection, wherein the first electronic tag data at least comprises electronic tag identifications of the target stock location.

7. The goods detection method according to claim 6, wherein the adjusting, by the first electronic tag reading device, a radiation angle of an antenna of the first electronic tag reading device, according to the information of the target stock location comprises:
calculating, by the first electronic tag reading device, a phase shift according to the information of the target stock location, changing a phase according to the phase shift, and adjusting the radiation angle of the antenna by changing the phase.

8. The goods detection method according to claim 6, further comprising:
the first electronic tag reading device being awakened after receiving an electromagnetic wave of a preset frequency band, before obtaining the information of the target stock location.

9. The goods detection method according to claim 8, further comprising:
sending, by a second electronic tag reading device, a scanning signal to awaken the first electronic tag reading device, and obtaining second electronic tag data of the target stock location through scanning, and transmitting the second electronic tag data to the server for goods detection, wherein the second electronic tag data at least comprises part or all of the electronic tag identifications of the target stock location.

10. The goods detection method according to claim 6, further comprising the server performing goods detection, comprising:
selecting, by the server according to a correspondence between stock location and electronic tag identification, electronic tag identifications of the target stock location from the first electronic tag data as a first electronic tag set, and determining goods corresponding to the electronic tag identifications in the first electronic tag set as actual goods at the target stock location; or
determining, by the server, goods corresponding to the electronic tag identifications in the first electronic tag data as the actual goods at the target stock location.

11. The goods detection method according to any of claims 1 to 10, wherein the target stock location is a stack-on-ground type stock location.

12. A server, comprising:
a memory; and
a processor coupled to the memory, wherein the processor is configured to perform the goods detection method according to any of claims 1 to 5 and 10 based on instructions stored in the memory.

13. An electronic tag reading device, comprising:
a control unit configured to calculate a phase shift according to information of a target stock location and send the phase shift to a phase shifter;
the phase shifter configured to change a phase according to the phase shift, and adjust a radiation angle of an antenna by changing the phase to make a radiation range cover the target stock location;
the antenna with the radiation angle adjustable by the phase, configured to emit a radiation signal and receive signals carrying electronic tag identifications returned by electronic tags within the radiation range; and
a communication unit configured to transmit received first electronic tag data within the radiation range to the server, wherein the first electronic tag data at least comprises electronic tag identifications of the target stock location.

14. The electronic tag reading device according to claim 13, further comprising:
an awakening unit configured to receive an electromagnetic wave of a preset frequency band and awaken the electronic tag reading device.

15. The electronic tag reading device according to claim 14, wherein the awakening unit comprises:
an awakening antenna configured to receive the electromagnetic wave of the preset frequency band; and
an awakening circuit configured to collect electromagnetic wave energy and generate a direct current signal for the awakening.

16. The electronic tag reading device according to claim 13, wherein the antenna comprises a feed network and an antenna array.

17. A goods detection system, comprising:
the server according to claim 12; and
a first electronic tag reading device deployed in areas in a warehouse and mounted on a ceiling, according to any of claims 13 to 16.

18. The goods detection system according to claim 17, further comprising:
a second electronic tag reading device used on ground, configured to send a scanning signal to awaken the first electronic tag reading device, and obtain second electronic tag data of the target stock location through scanning and transmit the second electronic tag data to the server, wherein the second electronic tag data at least comprises part or all of the electronic tag identifications of the target stock location.

19. A non-transitory computer-readable storage medium storing a computer program which is executed by a processor to implement the steps of the goods detection method according to any of claims 1 to 11.

20. A computer program, comprising:
instructions which are executed by a processor to perform the goods detection method according to any of claims 1 to 11.
